# EUROPEAN PATENT APPLICATION

(11) **EP 3 208 166 A1**
(43) Date of publication of application: **23.08.2017**
(21) Application number: 17156028.7
(22) Date of filing: 14.02.2017
(51) Int. Cl.: B60W 50/10, B60W 30/18, B60W 40/08, G05D 1/02

(54) **ADAPTIVE CRUISE CONTROL WITH OPERATOR INTENTION INFERENCE**

(30) Priority: 17.02.2016 US 201662296205 P; 07.12.2016 US 201615371572
(71) Applicant: Delphi Technologies, Inc., Troy, MI 48007-5052 (US)
(72) Inventor: SMITH, Matthew R., Springboro, OH 45066 (US); KHALIDI, Ashfeel, Rochester Hills, MI 48307 (US)
(74) Representative: Delphi France SAS

(57) **Abstract**

A lane-change system (10) suitable for use on an automated vehicle includes a turn-signal-actuator (16), an object-detector (22), a location-device (24), and a controller (30). The turn-signal-actuator (16) is operable to an operation-state (18) by an operator (14) of a host-vehicle (12). The operation-state (18) includes a left-state (18A), a right-state (18B), and an off-state (18C). The object-detector (22) is used to detect the presence of an other-vehicle (20) proximate to the host-vehicle (12). The location-device (24) is used to determine a location (26) of the host-vehicle (12) on a digital-map (28). The controller (30) is in communication with the turn-signal-actuator (16), the object-detector (22), and the location-device (24). The controller (30) determines when the operator (14) intends to pass the other-vehicle (20) or slow down to make a turn or exit the highway based on the operation-state (18) of the turn-signal-actuator (16) and the digital-map (28).

## Description

### TECHNICAL FIELD OF INVENTION

This disclosure generally relates to an adaptive cruise control system, and more particularly relates to determining an intention of an operator of a host-vehicle with regard to passing an other-vehicle and/or preparing to make a turn.

### BACKGROUND OF INVENTION

Traditional Adaptive Cruise Control (ACC) can waste fuel in several ways by not knowing an operator's intention. When the operator intends to slow down in preparation to turn, if the ACC doesn't detect this in some way, the vehicle may maintain or increase speed when coasting down to a lower speed would be more useful and fuel efficient. Another example is when the operator intends to pass an other-vehicle by changing lanes to the right or left, but when the ACC system doesn't detect this, the host-vehicle slows down, wasting momentum that it will have to work harder to gain back later. Although on the highway a left turn signal can be a reliable indication that the operator intends to pass the other-vehicle, in many circumstances the intention behind a turn signal is less clear. The presence of the turn signal alone could mean that the operator wants to slow down to turn or it could mean that the operator wants to change lanes to pass a slower other-vehicle. The desired system response could be opposite in these two cases, rendering the turn signal alone to be an inadequate measure of operator intention.

### SUMMARY OF THE INVENTION

In accordance with one embodiment, a lane-change system suitable for use on an automated vehicle is provided. The system includes a turn-signal-actuator, an object-detector, a location-device, and a controller. The turn-signal-actuator is operable to an operation-state by an operator of a host-vehicle. The operation-state includes a left-state, a right-state, and an off-state. The object-detector is used to detect the presence of an other-vehicle proximate to the host-vehicle. The location-device is used to determine a location of the host-vehicle on a digital-map. The controller is in communication with the turn-signal-actuator, the object-detector, and the location-device. The controller determines when the operator intends to pass the other-vehicle based on the operation-state of the turn-signal-actuator and the digital-map.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of lane-change system in accordance with one embodiment; and
Fig. 2 is a flow-chart of a method to operate the system of Fig. 1 in accordance with one embodiment.

### DETAILED DESCRIPTION

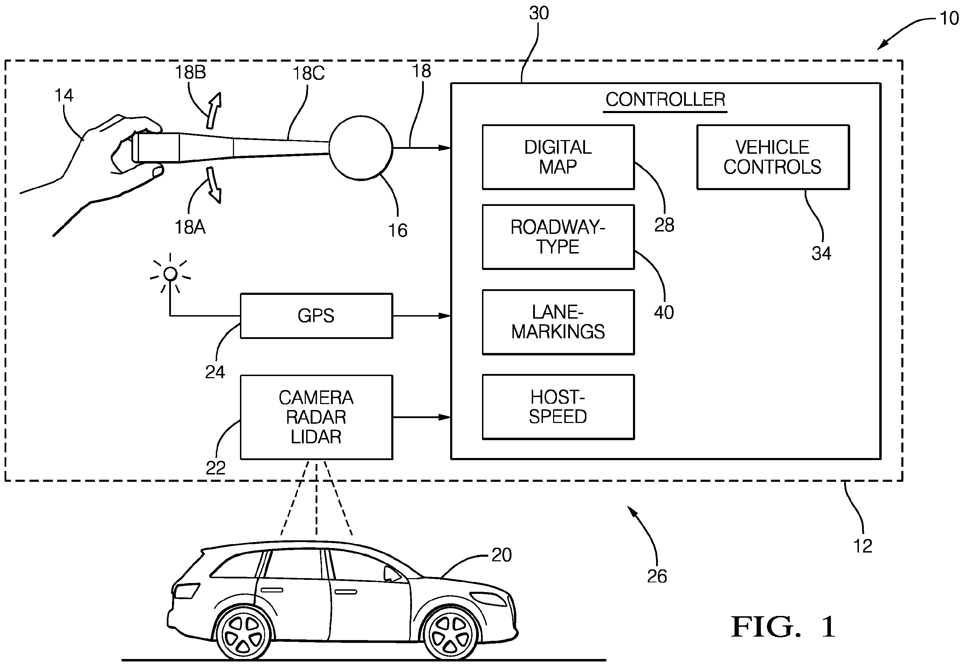

Fig. 1 illustrates a non limiting example of a lane-change system 10, hereafter referred to as the system 10. In general, the system 10 is suitable for use on an automated vehicle such as a host-vehicle 12. As used herein, the term automated vehicle may apply to instances when the host-vehicle 12 is being operated in an automated mode, i.e. a fully autonomous mode, where a human-operator of the host-vehicle 12 may do little more than designate a destination in order to operate the host-vehicle 12. However, full automation is not a requirement. It is contemplated that the teachings presented herein are useful when the host-vehicle 12 is operated in a semi-automated mode where the degree or level of automation may be automated speed control with some form of collision prevention (a.k.a. Adaptive Cruise Control or ACC) where an operator 14 is generally in control of the steering, but control or operation of the accelerator and optionally the brakes of the host-vehicle 12 are automated or assist the operator 14 when necessary.

The system 10 includes a turn-signal-actuator 16 operable to an operation-state 18 by the operator 14 of a host-vehicle 12. The operation-state includes a left-state 18A, a right-state 18B, and an off-state 18C that, respectively, activates left-turn indicators (not shown) of the host-vehicle, right-turn indicators (not shown) of the host-vehicle 12, or activates neither. As will be explained in more detail below, the advantage of the system 10 described herein is that the activation of the turn-signal-actuator 16 is used by the system 10 to infer the intent of the operator 14 with regard to passing an other-vehicle 20, or preparing to make a turn from the roadway or travel-lane presently occupied by the host-vehicle 12.

The system also includes an object-detector 22 used to detect the presence of the other-vehicle 20 which is generally proximate to the host-vehicle 12. As used herein, the term 'proximate to' means that position and speed of the other-vehicle 20 relative to the host-vehicle 12 is relevant to safe operation of the host-vehicle 12. By way of example and not limitation, the other-vehicle 20 or any other vehicle would be considered proximate to the host-vehicle if it were within one-hundred meters (100m) of the host-vehicle 12.

The system also includes a location-device 24 used to determine a location 26 of the host-vehicle 12 on a digital-map 28. By way of example and not limitation, the location-device 24 may be a receiver for a global-positioning-system (GPS), the configuration and operation of which is well-known. Alternatively, the location-device 24 may include other means to determine the location 26 of the host-vehicle 12 on the digital-map 28 such as a transceiver used for vehicle-to-infrastructure (V2I) communications and/or a camera used for optical recognition of the landscape (e.g. buildings, signs) around the host-vehicle 12.

The system also includes a controller 30 in communication with the turn-signal-actuator 16, the object-detector 22, and the location-device 24. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including non-volatile memory, such as electrically erasable programmable read-only memory (EEPROM) for storing one or more routines, thresholds, and captured data. The one or more routines may be executed by the processor to perform steps for determining the intent of the operator 14 based on signals received by the controller 30 from the turn-signal-actuator 16, the object-detector 22, and the location-device 24, as described herein. By way of example and not limitation, the controller 30 determines when the operator 14 intends to pass the other-vehicle 20 based on the operation-state 18 of the turn-signal-actuator 16 and information from the digital-map 28. While the digital-map 28 is shown as being part of or within the controller 30, it is contemplated that the digital-map 28 could be located or stored 'in the cloud', i.e. remote from the host-vehicle 12.

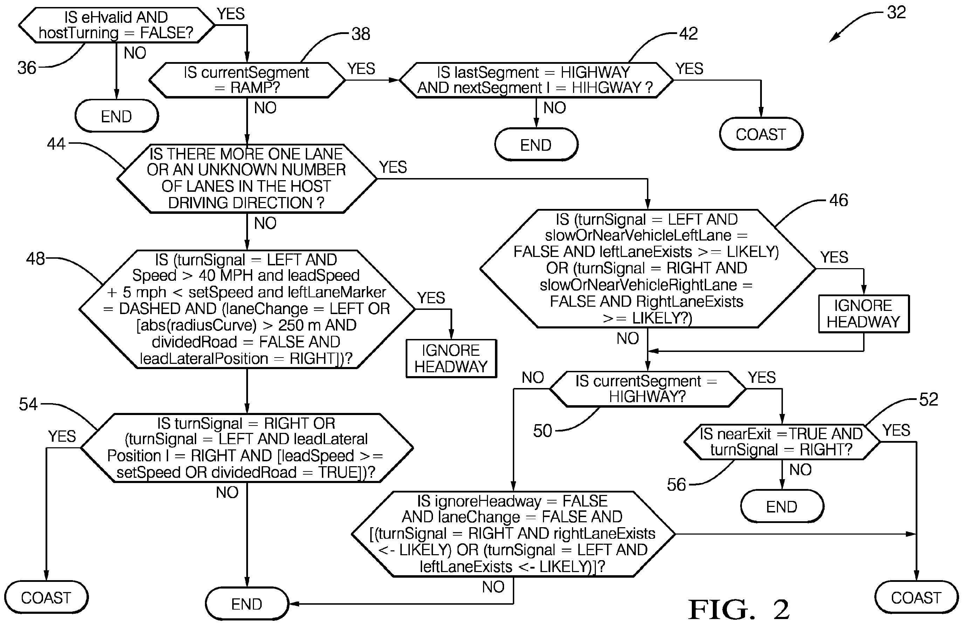

Fig. 2 illustrates a non-limiting example of a method 32 of operating the host-vehicle 12. The method 32 uses the digital-map 28, e.g. Electronic Horizon (eH) data, to infer whether the operator 14 of the host-vehicle 12 intends to slow down in preparation to turn, or the operator 14 intends to pass, for example, the other-vehicle 20 when the turn-signal-actuator 16 is operated to the left-state 18A or the right-state 18B. In cases where the operator 14 intends to turn, the system 10 can coast down (similar to when the operator 14 does not apply any brake or any throttle) and use less fuel than maintaining a constant speed or accelerating back to a set speed. On the other hand when the operator 14 intends to pass, either on the right-side or the left-side of the other-vehicle 20 which is located ahead of the host-vehicle 12, the system can operate the host-vehicle 12 via vehicle controls 34 to begin to return to or remain at a set speed. In cases where the host-vehicle 12 has not yet slowed behind the other-vehicle 20 which is traveling slower than the host-vehicle 12, the system 10, or more specifically the controller 30, can infer that the intention is to pass the other-vehicle 20 so the host-vehicle 12 can be advantageously operated to preserve momentum and fuel.

The method 32 illustrates the flow of logic for determining that the operator 14 intends to turn (COAST) or whether the operator 14 intends to pass (IGNORE HEADWAY). These flags can be provided to the adaptive cruise control system so that the appropriate action is taken when the operator 14 uses the turn signal.

Decision 36 will not allow coasting or headway-ignoring to occur when the eH data (i.e. the digital-map 28) is not valid or the host-vehicle 12 is turning

(as indicated by a small radius of curvature measure). "Is current Segment = RAMP?" in decision 38 refers to the current eH segment form-of-way beneath the host-vehicle 12, and this decision may be made by the roadway-type block 40 in the controller 30.

Decision 42 determines whether the last segment is highway form-of-way and the next segment form-of-way is not highway. Note that lastSegment refers to the roadway segment prior to the current in which the form-of-way differed from the current value. Similarly, nextSegment refers to the roadway segment after the current segment in which the form-of-way differs from the current form-of-way value. Note that all other cases refer to properties of the current road segment that the host-vehicle 12 is traversing. When decision 42 is affirmative, it indicates that the current segment is an off-ramp leading from a highway segment to a non-highway segment and so the host-vehicle 12 will coast down so that it approaches a more reasonable non-highway speed.

Decision 44 determines whether the current segment has more than one lane or an unknown number of lanes designated for travel in the same direction as the host-vehicle 12. The answer is false (no) when there is either only one lane in the host direction and an unknown number of lanes. Also note that the method 32 chart assumes that vehicles drive on the right side of the road.

Decision 46 determines when the host-vehicle 12 intends to pass the other-vehicle 20 (if it exists) by using an adjacent lane indicated by the operation-state 18 of the turn-signal-actuator 16. It is assumed that the host-vehicle 12 should ignore the other-vehicle 20 (within safety margins) when the operation-state 18 is to the left-state 18A and a left lane exists (leftLaneExists >= LIKELY) that is unoccupied by a slower or near vehicle (slowOrNearVehicleLeftLane=FALSE) or when the operation-state 18 is to the right-state 18B and the right lane exists (rightLaneExists >= LIKELY) that is unoccupied by a slower or near vehicle (slowOrNearVehicleRightLane=FALSE). The properties of LeftLaneExists and RightLaneExists exceed a positive non-zero value of LIKELY when it is likely that they exist and are less than a negative non-zero value of LIKELY when it is likely that they do not exist. A zero value of these variables indicates that the existence of a lane in that direction is unknown. Note that in countries where drivers strictly adhere to only passing on one side (e.g., Germany), the other side of this expression may be removed.

Decision 48 determines when the host-vehicle 12 is on a one-lane (in its direction) plans to use the oncoming lane to pass the other-vehicle 20. It is assumed that the host-vehicle 12 intends to pass when the operation-state 18 is the left-state and the host-vehicle 12 is traveling at greater than forty miles-per-hour (40mph) and the other-vehicle 20 is traveling at a speed at least five miles-per-hour (5mph) less than the ACC set speed and the left lane marker is dashed (meaning that using the left lane to pass is legal) and either a lane change to the left has already began or the roadway is relatively straight (abs(radiusCurve) > 250 m) affording sufficient visibility of the oncoming lane to pass and the current roadway segment is not divided and the position of the other-vehicle 20 is to the right of the host-vehicle 12 (leadLateralPosition=RIGHT). The leadLateralPosition value refers to the relative position of the other-vehicle 20 compared to the host-vehicle 12 centerline such that when the host-vehicle 12 begins changing lanes to the left or the other-vehicle 20 begins changing lanes to the right, the rightward relative position of the other-vehicle 20 would cause the leadLateralPosition to be equal to RIGHT. Note that in countries that drive on the left side of the road, the left and right terms would be reversed in all cases. This decision block may also include a requirement that no oncoming vehicles are detected unless they will be passed before the lane change is likely to take place.

Decision 50 determines whether the current segment is a highway form-of-way. On a highway it is far less likely that the operator 14 intends to slow down to turn unless there is an exit ramp stub present. Decision 52 determines whether there is an exit ramp near and the turn signal is to the right to assess the case that the operator 14 intends to exit the highway. In cases where it is common to have highway exits on the left, the same question to the left could either replace or be OR'd with the current question shown in the decision block.

Decision 54 involves cases where eH informs us that there is only one lane in the host direction and determines whether the right turn signal is present or there is a combination of a left turn signal, the other-vehicle 20 not being over to the right of the host-vehicle 12 (leadLateralPosition != RIGHT), and either the lead speed greater than the host speed or the road is divided. The extra checks on the left side are used to prevent mistaking a passing intention for a slow-to-turn intention as it is better to err on the side of not coasting. Note that the sides in this decision block would be reversed in countries that drive on the left side of the road.

Decision 56 involves cases where the current segment is not a highway but has more than one lane (or an unknown number of lanes) in the host direction and evaluates for an intention to slow-to-turn. It determines whether headway is not being ignored (from decision 46) and a lane change is not taking place and the turn signal is present and in the same direction of a lane that appears to exist [(turnSignal = RIGHT AND rightLaneExists < -LIKELY) OR (turnSignal = LEFT AND leftLaneExists < -LIKELY)]?

While this invention has been described in terms of the preferred embodiments thereof, it is not intended to be so limited, but rather only to the extent set forth in the claims that follow.

## Claims

1. A lane-change system (10) suitable for use on an automated vehicle, said system (10) comprising:
a turn-signal-actuator (16) operable to an operation-state (18) by an operator (14) of a host-vehicle (12), wherein the operation-state (18) includes a left-state (18A), a right-state (18B), and an off-state (18C);
an object-detector (22) used to detect the presence of an other-vehicle (20) proximate to the host-vehicle (12);
a location-device (24) used to determine a location (26) of the host-vehicle (12) on a digital-map (28); and
a controller (30) in communication with the turn-signal-actuator (16), the object-detector (22), and the location-device (24), wherein the controller (30) determines when the operator (14) intends to pass the other-vehicle (20) based on the operation-state (18) of the turn-signal-actuator (16) and the digital-map (28).

2. The system (10) in accordance with claim 1, wherein the controller (30) determine when the operator (14) intends to slow down to make a turn.

3. The system (1) in accordance with claim 1 or 2, wherein the controller (30) operates (46) the host-vehicle (12) to maintain a headway behind an other-vehicle (20) forward of the host-vehicle (12) when the turn-signal-actuator (16) is in the off state (18C), and operates (46) the host-vehicle (12) to maintain less than the headway behind the other-vehicle (20) forward of the host-vehicle (12) when the turn-signal-actuator (16) is in the left-state (18A) and a travel lane left of the host-vehicle (20) is not occupied, or when the turn-signal-actuator (16) is in the right-state (18B) and a travel lane right of the host-vehicle (12) is not occupied.
